# EUROPÄISCHE PATENTSCHRIFT

(11) **EP 0 943 654 B1**
(45) Veröffentlichungstag und Bekanntmachung des Hinweises auf die Patenterteilung: **02.06.2004**
(21) Anmeldenummer: 99104819.0
(22) Anmeldetag: 11.03.1999
(51) Int. Cl.: C08K 5/526, C08K 5/375, C07F 9/145

(54) **Oligomeres Stabilisatorgemisch**
Mixture of oligomeric stabilizers
Mélange de stabilisateurs oligomériques

(30) Priorität: 20.03.1998 DE 19812224
(43) Veröffentlichungstag der Anmeldung: 22.09.1999
(73) Patentinhaber: Clariant GmbH, 65929 Frankfurt am Main (DE)
(72) Erfinder: Stährfeldt, Thomas Dr., 79576 Weil am Rhein (DE); Lichtblau, Alexander Dr., 86154 Augsburg (DE); Pfahler, Gerhard Dr., 82223 Eichenau (DE); Gaa, Karl Dr., 89349 Burtenbach (DE)

(56) Entgegenhaltungen:
- DE-A- 3 029 176
- DE-B- 1 153 894
- FR-A- 1 595 889

## Beschreibung

Die vorliegende Erfindung betrifft ein neues Stabilisatorgemisch, das den durch Metallverbindungen beschleunigten Abbau- und Alterungsprozeß von organischen Materialien, insbesondere von organischen Polymeren, deutlich verlangsamt.

Organische Materialien, insbesondere Kunststoffe, können in vielfältiger Art mit Metallen, Metallionen und metallhaltigen Verbindungen in Kontakt kommen. Solche Kontakte sind besonders dann unvermeidbar, wenn es sich um Rückstände von metallischen Katalysatoren handelt, die zur Herstellung des Kunststoffes zum Einsatz kommen. Auch bei der Verarbeitung von organischen Polymeren kommen diese in mannigfaltiger Art mit metallischen Oberflächen in Berührung. Darüber hinaus werden verschiedene metallhaltige Verbindungen dem Kunststoff absichtlich zur Erzielung spezieller Effekte beigemischt; Beispiele hierfür sind metallhaltige Stabilisatoren, Pigmente oder Füllstoffe. Darüber hinaus ist anzumerken, daß organische Polymere in der Endanwendung sehr oft mit Metallen in direktem Kontakt stehen, wie es bei Kabelummantelungen, Rohren und bei elektronischen Bauteilen oft die Regel ist.

Wie alle organischen Verbindungen sind auch Kunststoffe einem natürlichen Alterungsprozeß unterworfen. Dieser Vorgang, der mit der Beeinträchtigung der Gebrauchseigenschaften einhergeht und stets mit dem Zerfall des organischen Materials endet, kann durch Akzeleratoren beschleunigt und von Stabilisatoren verlangsamt werden. Metalle und metallhaltige Verbindungen sind in der Regel als Akzeleratoren für derartige Abbau- und Alterungsprozesse bekannt (vgl. R. Gächter, H. Müller, Taschenbuch der Kunststoff-Additive, Carl Hanser Verlag München, Wien; 3. Ausgabe, 1989; Kapitel 2, S. 109 ff).

In einer Mischung mit weiteren Chemikalien wird die Verwendung eines Kondensationsproduktes aus Phosphortrichlorid (1) und 2,2'-Dimethyl-4,4'dihydroxy-5,5'-di-tert.butyt-diphenylsulfid (2) in DE-A-1 153 894 beschrieben. Es gibt jedoch keinen Hinweis auf eine stabilisierende Wirkung des Produktes alleine. Hier wird dieses Kondensationsprodukt nur in Kombination mit dem Kondensationsprodukt aus Nonylphenol und Aceton und mit Thiodipropionsäuredilaurylester eingesetzt (Vergleichsversuch Nr. 5). In DE-A-1 153 894 wird die stabilisierende Wirkung der beschriebenen Mischung auf Kupfer-kontaminiertes Polypropylen gegen die schädigende Wirkung von Wärme und Sauerstoff beschrieben.

Die Wirksamkeit eines Kondensationsproduktes aus (1) und (2) allein und dessen Verwendung als Stabilisator für organisches Material wird erst in DE-A-3 029 176 beschrieben. Dort handelt es sich um ein dreidimensional vernetztes, in allen organischen Lösungsmitteln unlösliches Polymer mit einem Phosphorgehalt von 4.9% (DE-A-3 029 176, S. 2, Zeile 17; S. 5, Beispiel 3). Beschrieben wird dort die stabilisierende Wirkung des hochmolekularen, unlöslichen Kondensationsproduktes das einen Polymerisationsgrad von 50 bis 500 hat auf ein Polymer (S. 3, Z. 45). Es wird die Stabilisierung gegen die schädigenden Einflüsse von Sauerstoff und Wärme beschrieben. Zur Herstellung des Kondensationsproduktes werden dort die Edukte (1) und (2) innerhalb 15 min. bei nur 50 °C in Xylol in Anwesenheit von einer kleinen Menge an Dimethylformamid zusammengeführt, nach 1 Stunde Rühren (50 °C) auf 135 °C erhitzt und bei dieser Temperatur 1 Stunde lang unter Abspaltung von Chlorwasserstoff kondensiert.

Das aus dem Stand der Technik bekannte Kondensationsprodukt ist in organischen Lösemitteln unlöslich und zeichnet sich durch eine nicht befriedigende Stabilisierungswirkung aus. Es bestand daher die Aufgabe, ein besser lösliches und wirksameres Produkt zur Verfügung zu stellen.

Überraschenderweise wurde gefunden, daß durch geeignete Reaktionsführung aus den Verbindungen (1) und (2) sich ein Stabilisatorgemisch herstellen läßt, das hervorragend in organischen Lösemitteln und im Polymer löslich ist und das eine ausgezeichnete Stabilisierungswirkung aufweist.

Gegenstand der Erfindung ist somit ein Stabilisatorgemisch, erhältlich durch partielle Kondensation von PCl₃ mit 2,2'-Dimethyl-4,4'-dihydroxy-5,5'-di-tert.butyldiphenylsulfid, wobei der Phosphor-Gehalt zwischen 2 und 4 Gew.-% und der Gehalt an nicht umgesetztem 2,2'-Dimethyl-4,4'-dihydroxy-5,5'-di-tert.butyldiphenylsulfid zwischen 0,5 und 50 Gew.-% liegt. Unter Abspaltung von Chlorwasserstoff entstehen dabei aus einem Teil der phenolischen Hydroxylgruppen Phosphor-Sauerstoffbindungen. Bestandteil im erfindungsgemäßen Stabilisatorgemisch ist immer auch nicht umgesetztes 2,2'-Dimethyl-4,4'-dihydroxy-5,5'-di-tert.butyl-diphenylsulfid (2), vgl. Abbildung 1.

Bei Phosphortrichlorid (1) handelt es sich um einen dreivalenten, bei 2,2'-Dimethyl-4,4'-dihydroxy-5,5'-di-tert.butyl-diphenylsulfid (2) um einen zweivalenten Stoff. Die Verknüpfung unter Ausbildung von Phosphor-Sauerstoffbindungen kann daher in sehr vielfältiger Art erfolgen.

### Abbildung 1: Bildung des Stabilisatorgemisches aus den Verbindungen (1) und (2)

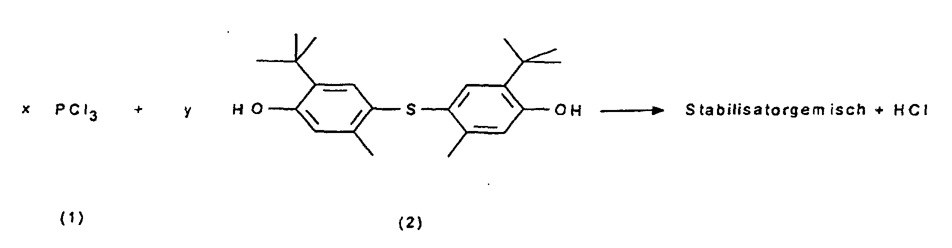

Das erfindungsgemäße Stabilisatorgemisch bildet sich bei einem x/y-Verhältnis von 1:2,1 bis 1:4,3.

Bei einem Molverhältnis (1):(2) von 1:3 ist die Bildung einer diskreten, monomeren Verbindung möglich, die ein abgesättigtes Phosphoratom als zentralen Bestandteil enthält (Abbildung 2). Bei einem Molverhältnis (1) : (2) von 1:2,5 bzw. von 1:2,3 ist die Bildung von diskreten, monomeren Verbindungen möglich, die zwei bzw. drei Phosphoratome als diskreten Bestandteil enthalten (Abbildung 2). Bei einem Molverhältnis von 1:2 ist die Bildung einer polymeren Kette möglich, in der sich ein abgesättigtes Phosphoratom und ein 2,2'-Dimethyl-4,4'-oxy-5,5'-di-tert.butyldiphenylsulfid-Fragment abwechseln. Bei einem Molverhältnis von 1:1 ist die Bildung eines zweidimensionalen, hochpolymeren Flächennetzes möglich (Abbildung 2).

### Abb. 2: denkbare Arten der Verknüpfung, ausgehend von Verbindung (1) und (2)

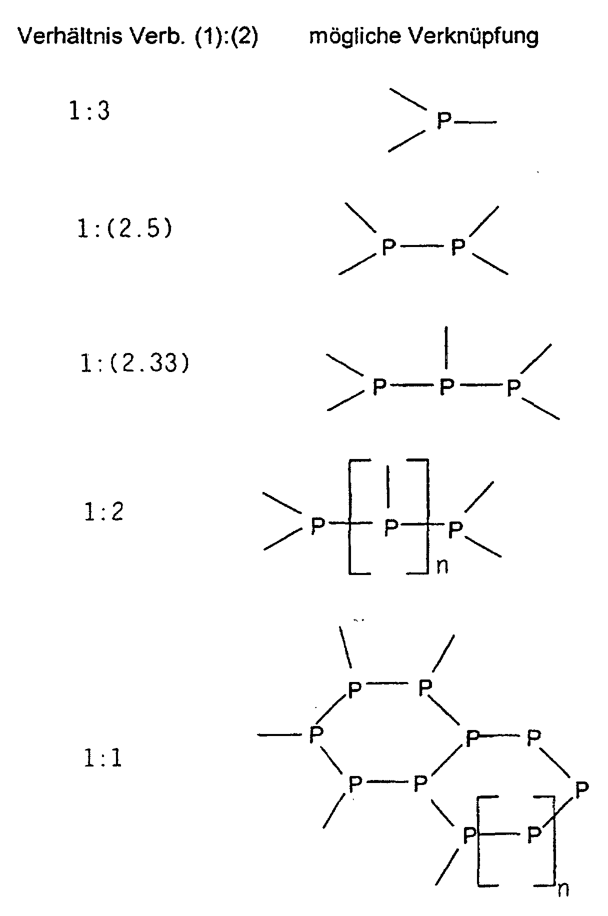

Darüber hinaus können durch Disproportionierung oder partielle Oxidation auch P^{IV} und P^{V} Verbindungen gebildet werden. Durch die Spaltung der vergleichsweise labilen Phenyl-S-Phenyl-Bindungen können Fragmente von Verbindung (2) entstehen, die selbst wieder in einer partiellen Kondensation in das erfindungsgemäße Stabilisatorgemisch eingebaut werden können.

Das erfindungsgemäße Stabilisatorgemisch wird durch die partielle Kondensation von Phosphortrichlorid (1) und 2,2'-Dimethyl-4,4'-dihydroxy-5,5'-di-tert.butyldiphenylsulfid (2) unter Ausbildung von Phosphor-Sauerstoffbindungen und gleichzeitiger Abspaltung von Chlorwasserstoff hergestellt. Das neue Stabilisatorgemisch enthält im Gegensatz zur in DE-A-3 029 176 beschriebenen Verbindung neben dem reinen Kondensationsprodukt außerdem einen Anteil an 2,2'-Dimethyl-4,4'-dihydroxy-5,5'-di-tert.butyl-diphenylsulfid und zeichnet sich durch eine sehr gute Löslichkeit in organischen Lösungsmitteln und einen P-Gehalt von 2,0 bis 4,0 Gew.% aus.

Ein weiterer Gegenstand der Erfindung ist ein Verfahren zur Herstellung des neuen Stabilisatorgemisches.

Überraschenderweise bildet sich ein zur Stabilisierung von polymerem organischem Material hervorragend geeignetes Stabilisatorgemisch, wenn in geeigneter Atmosphäre, vorzugsweise in Inertgas, 2,2'-Dimethyl-4,4'-dihydroxy-5,5'-di-tert.butyldiphenylsulfid (2) in einem organischen Lösungsmittel, vorzugsweise in einem aromatischen Lösungsmittel, insbesondere in Toluol oder in o-Xylol, vorgelegt wird; bei einer Temperatur von 20 °C bis 150 °C, bevorzugt von 100 °C bis 140 °C, insbesondere von 115 °C bis 130 °C, mit Phosphortrichlorid (1) versetzt wird, wobei das Molverhältnis von (1):(2) zwischen 1:2.1 und 1:4.3 liegt und die Zugabe von Phosphortrichlorid (1) innerhalb einer Zeitspanne von 0,5 bis 8 Stunden, bevorzugt innerhalb 3 bis 5 Stunden, gleichmäßig und langsam erfolgt; wenn die Reaktionsmischung bei derselben Temperatur 3 bis 20 Stunden, bevorzugt 8 bis 14 Stunden, gerührt wird; wenn das Produkt bei Temperaturen bis zu 190 °C und einem verminderten Druck bis zu 30 mbar, über eine Zeitspanne von 2 bis 10 Stunden, bevorzugt 4 bis 8 Stunden, von flüchtigen Bestandteilen befreit wird.

Nach der so beschriebenen Prozedur wird ein Stabilisatorgemisch erhalten, das einen Gehalt an 2,2'-Dimethyl-4,4'-dihydroxy-5,5'-di tert.butyl-diphenylsulfid von 0,5 bis 50 Gew.-%, vorzugsweise zwischen 5 und 30 Gew.-%, insbesondere zwischen 8 und 35 Gew.-% enthält, das sich im Gegensatz zu der in DE-A-3 029 176 beschriebenen hochpolymeren, vernetzten und unlöslichen Verbindung in organischen Lösungsmitteln, wie z. B. in o-Xylol hervorragend löst, das einen Phosphorgehalt von 2,0 bis 4,0, vorzugsweise von 2,3 bis 3,5 Gew.-% hat und sich als Stabilisator für polymeres organisches Material hervorragend eignet.

Überraschend ist auch die Tatsache (vgl. Beispiel 1 und 2, Experimentalteil), daß selbst bei einem Molverhältnis von 1:3 (PCl₃ zu 2,2'-Dimethyl-4,4'-dihydroxy-5,5'-ditert.butyl-diphenylsulfid) nicht das in Abbildung 2 skizzierte diskrete Molekül gebildet wird. Vielmehr wird bei einem Molverhältnis von z. B. 1:3 direkt, kostengünstig und ohne den Aufwand eines sich anschließenden Arbeitsgangs die erfindungsgemäße Mischung erhalten, die je nach Reaktionsführung einen Gehalt an 2,2'-Dimethyl-4,4'dihydroxy-5,5'-di-tert.butyl-diphenylsulfid von z. B. 0,5 bis 50 Gew.-% haben kann (vgl. Beispiel 1 und 2, Experimentalteil). Das Molverhältnis der beiden Edukte (1):(2) zueinander läßt noch keinen Rückschluß auf den im Produktgemisch verbleibenden Restgehalt an 2,2'-Dimethyl-4,4'-dihydroxy-5,5'-ditert.butyl-diphenylsulfid zu. Dieser Restgehalt ist durch die Reaktionsführung in weiten Grenzen gezielt einstellbar. In jedem Fall entsteht so ein in organischen Lösungsmitteln gut lösliches Produktgemisch mit einem P-Gehalt von 2,0 - 4,0 Gew.-%.

Das neue Stabilisatorgemisch ist ein sprödes Harz, dessen Erweichungsbereich zwischen 70 und 140 °C, charakteristischerweise zwischen 105 und 135 °C liegt. Es kann dem zu stabilisierenden organischen Material vor, während oder nach der Polymerisation in fester, geschmolzener, in Lösungsmitteln gelöster Form oder auch als Masterbatch zugegeben werden. Bei dem Zusatz als Feststoff eignet sich das neue Stabilisatorgemisch besonders in fein verteilter Form. Ein Masterbatch eignet sich besonders gut, wenn es das neue Stabilisatorgemisch in einer Konzentration von 1 bis 80 Gew.-%, vorzugsweise aber von 5 - 30 Gew.-% enthält, der Rest im Masterbatch ist ein mit dem zu stabilisierenden Polymer verträgliches Polymer. Besonders eignet sich die Einarbeitung in gelöster Form, wobei die Lösungen das neue Stabilisatorgemisch z. B. in 5 - 80 gew.-%iger Konzentration enthalten können. Sowohl die Lösung, als auch das Masterbatch können zusätzlich noch weitere Stabilisatoren oder Effektstoffe, z. B. UV-Absorber, Lichtschutzmittel auf Basis von sterisch gehinderten Aminen, Quencher, Antioxidantien, Pigmente, Säurefänger oder Füllstoffe, enthalten. Das neue Stabilisatorgemisch wird vorzugsweise so eingesetzt, daß es im zu stabilisierenden Polymer in einer Konzentration von 0,001 bis 5 Gew.-%, vorzugsweise von 0,02 bis 2 Gew.-%, bezogen auf das organische Material, entweder alleine oder in Kombination mit weiteren Additiven enthalten ist. Unter organischem Material sind beispielsweise Vorprodukte für Kunststoffe, Anstrichmittel, Lacke und Öle, insbesondere jedoch Kunststoffe, Anstrichmittel, Lacke und Öle selbst zu verstehen.

Im besonderen eignet sich das neue Stabilisatorgemisch zum Stabilisieren von Folien, Fasern, Bändchen, Multifilamenten, Geweben, Extrusions-, Blasform-, Spritzguß-, Tiefziehartikeln, Pulverlacken, Druckfarben, Tonerfarben, photographischem Material, Pigmenten, Holzbeizen, Leder, Anstrichfarben für Gebäude, Schutzanstrichen für Stahlkonstruktionen, Schmierölen, Maschinenölen, Bitumen, Asphalt, insbesondere in Anwendungen, in denen das stabilisierte organische Material im Kontakt mit Metallen oder mit metallischen Verbindungen steht oder metallische Verbindungen, z. B. als Katalysatorreste, enthält.

Das erfindungsgemäße neue Stabilisatorgemisch kann auch in vorteilhafter Weise in Kombinationen mit weiteren Stabilisatoren eingesetzt werden. Beispiele hierfür sind Kombinationen mit UV-Absorbern, Lichtschutzmitteln auf Basis von sterisch gehinderten Aminen, Quenchern, Antioxidantien, Pigmenten, Säurefängern oder Füllstoffen. Das Resultat dieser neuen Kombinationen sind Mischungen mit einem verbesserten Eigenschaftsprofil gegenüber den Einzelkomponenten, wie z. B. synergistische Effekte in der verlangsamenden Wirkung auf Alterungsprozesse der erfindungsgemäß stabilisierten organischen Materialien.

Gegenstand der vorliegenden Erfindung ist außerdem ein gegen die Einwirkung von Licht, Sauerstoff und Wärme stabilisiertes organisches Material, insbesondere Kunststoffe, Anstrichmittel, Lacke und Öle, welches das neue Stabilisatorgemisch in den oben angegebenen Konzentrationen enthält.

Beispiele für derartige Materialien sind in der deutschen Patentanmeldung Nr. 19 719 944.5 auf den Seiten 44 bis 50 beschrieben, worauf hier ausdrücklich Bezug genommen wird.

Das neue Stabilisatorgemisch oder das durch eine geeignete Kombination mit diesem Stabilisatorgemisch stabilisierte organische Material kann gegebenenfalls noch weitere Additive enthalten, beispielsweise Antioxidantien, Lichtstabilisierungsmittel, weitere Metalldesaktivatoren, antistatische Mittel, flammhemmende Mittel, Gleitmittel, Nukleierungsmittel, Säurefänger (basische Costabilisatoren), Pigmente und Füllstoffe. Antioxidantien und Lichtstabilisatoren, die neben den erfindungsgemäßen Verbindungen oder Kombinationen zugesetzt werden, sind beispielsweise Verbindungen auf der Basis sterisch gehinderter Amine oder sterisch gehinderter Phenole oder Schwefel oder Phosphor enthaltende Costabilisatoren. Beispiele für solche Verbindungen sind in der deutschen Patentanmeldung Nr. 19 719 944.5 auf den Seiten 51 - 65 unter Punkt 1 - 15 beschrieben, worauf hier ausdrücklich Bezug genommen wird.

### Experimentalteil

### Beispiel 1: Herstellung A des neuen Stabilisatorgemisches durch partielle Kondensation von Phosphortrichlorid (1) mit 2,2'-Dimethyl-4,4'dihydroxy-5,5'-di-tert.butyl-diphenylsulfid (2)

64,4 g (180 mmol) Verbindung (2) werden bei 20°C in 45 ml o-Xylol vorgelegt. Unter Schutzgas (Stickstoff) werden 8,7 g (63 mmol) Verbindung (1) innerhalb 0,5 h zugegeben, dabei erwärmt sich die Reaktionsmischung auf 60 °C. Die Mischung wird 6 Stunden bei 120 °C gerührt, auf 160 °C erwärmt und bei einem auf 150 mbar verringerten Druck unter Rühren weitere 6 h von den flüchtigen Bestandteilen befreit. Die auf etwa 20 °C abgekühlte Schmelze wird mit flüssigem Stickstoff in kleine Bruchstücke zerlegt. Das Produkt hat einen Erweichungsbereich von 107 - 109 °C, einen Phosphorgehalt von 2,6 Gew.-%, einen Gehalt an 2,2'-Dimethyl-4,4'dihydroxy-5,5'-di-tert.butyl-diphenylsulfid (2) von 50 Gew.-% und eine Flüchtigkeit von 23,5 % (Bestimmung der Flüchtigkeit wie folgt: Einwaage 500 mg; Aufheizung 120 K/h; Atmosphäre: 1 l Stickstoff pro Minute; Pfännchen: Pt; Oberfläche: 3 cm²; Erhitzen bis auf 300 °C und bei dieser Temperatur 30 min. halten; unter der Flüchtigkeit versteht sich die Gewichtsabnahme nach 30 min./300°C).

### Beispiel 2: Herstellung B des neuen Stabilisatorgemisches durch partielle Kondensation von Phosphortrichlorid (1) mit 2,2'-Dimethyl-4,4'dihydroxy-5,5'-di-tert.butyl-diphenylsulfid (2)

64,4 g (180 mmol) Verbindung (2) werden in 45 ml o-Xylol vorgelegt und unter Schutzgas (Stickstoff) auf 120 °C erwärmt. Unter intensivem Rühren werden 8,7 g (63 mmol) Verbindung (1) im Verlauf von 3 Stunden langsam und gleichmäßig zugegeben. Die Mischung wird 6 Stunden bei 120 °C gerührt und dann bei einem auf 150 mbar verringerten Druck bei 185 °C unter Rühren weitere 6 h von den flüchtigen Bestandteilen befreit. Nach 6 h wird die Schmelze auf etwa 20 °C abgekühlt und mit flüssigem Stickstoff in kleine Bruchstücke zerlegt. Das Produkt hat einen Erweichungsbereich von 118 - 120°C, einen Phosphorgehalt von 3,0 Gew.-%, einen Gehalt an 2,2'-Dimethyl-4,4'-dihydroxy-5,5'-di-tert.butyldiphenylsulfid (2) von 25 Gew.-% und eine Flüchtigkeit von 16.9 % (Bestimmung der Flüchtigkeit wie folgt: Einwaage 500 mg; Aufheizung 120 K/h; Atmosphäre: 1 l Stickstoff pro Minute; Pfännchen: Pt; Oberfläche: 3 cm²; Erhitzen bis auf 300 °C und bei dieser Temperatur 30 min. halten; unter der Flüchtigkeit versteht sich die Gewichtsabnahme nach 30 min./300°C).

### Beispiele 3 bis 12: Stabilisierende Wirkung des neuen partiell kondensierten Stabilisatorgemisches in Polypropylen mit Kupferkontakt.

100 Teile Polypropylenpulver werden mit 0,2 Teilen Calciumstearat und den in Tabelle 1 angegebenen Mengen an Stabilisatoren in einem Extruder mit einer Kurzkompressionsschnecke mit einer Länge von 450 mm und einem L/D-Verhältnis von 20 über 3 Heizzonen mit 200°C, 230°C, 230°C granuliert und anschließend aus dem Granulat mit einer Spritzgießmaschine über 4 Heizzonen mit 210°C, 220°C, 230°C, 240°C, einem Schneckendurchmesser von 36 mm und einem L/D-Verhältnis von 25 1 mm dicke Platten gespritzt. Zwischen zwei dieser Platten wird eine Kupferfolie mit frisch reduzierter Oberfläche eingelegt und in einer Laborpresse zwischen zwei Polyesterfolien auf 1 mm Gesamtdicke bei 190°C 2 min Aufwärmen, 2 min Kontaktzeit und 2 min Druck von 10 MN/m² verpresst. Eine frisch reduzierte Kupferoberfläche kann durch Glühen des Kupferblechs und Abschrecken in Methanol erhalten werden. Die so erhaltenen Prüfkörper werden in einen temperaturgeregelten Umluftofen bei der angegebenen Temperatur gelagert, bis visuell erkennbarer Abbau durch Verfärbung oder Rißbildung erkennbar wird oder die Proben beim Biegen um 180° brechen. Hohe Werte bis zur Versprödung in der beschleunigten Alterung im Umluftofen zeigen eine gute Stabilisierung an.

**Tabelle 1:**

| Langzeitwärmebeständigkeit von Polypropylen in Tagen bei Kontakt mit Kupferblech: | | | |
|---|---|---|---|
| Bsp. Nr. | Stabilisator | Konzentration [phr] | Versprödungszeit bei 140°C [d] |
| 3 | Kondensationsprodukt aus Nonylphenol und Aceton + Reaktionsprodukt aus 2,2'-Dimethyl-4,4'-dihydroxy-5,5'-di-tert.butyl-diphenylsulfid mit PCl₃ ¹⁾ | 0,5 + 0,5 | 2¹⁾ |
| 4 | partielles Kondensationsprodukt aus 2,2'-Dimethyl-4,4'-dihydroxy-5,5'-di-tert.butyldiphenylsulfid mit PCl₃ (gem. Beispiel 2) | 0,5 | 8 |
| 5 | Kondensationsprodukt aus Nonyl-phenol und Aceton + Thiodipro- pionsäuredilaurylester/Reaktions-produkt aus 2,2'-Dimethyl-4,4'-dihydroxy-5,5'-di-tert.butyl- diphenylsulfid mit PCl₃ ¹⁾ | 0,5 + 0,5 + 0,5 | 7¹⁾ |
| 6 | Bis-[3,3-bis(4'-hydroxy-3'-tert.butylphenyl)butansäureglykol-ester | 0,2 | 5 |
| 7 | Bis-[3,3-bis(4'-hydroxy-3'-tert. butylphenyl)butansäureglykolester + partielles Kondensationsprodukt aus 2,2'- Dimethyl-4,4'-dihydroxy-5,5'-di-tert.butyldiphenylsulfid mit PCl₃ (gem. Beispiel 2) | 0,2 + 0,5 | 31 |
| 8 | Distearylthiodipropionat | 0,6 | 5 |
| 9 | partielles Kondensationsprodukt aus 2,2'-Dimethyl-4,4'-dihydroxy-5,5'-di-tert.butyldiphenylsulfid mit PCl₃ (gem. Beispiel 2) + Distearylthiodipropionat | 0,5 + 0,6 | 43 |
| 10 | Bis-[3,3-bis(4'-hydroxy-3'-tert.butylphenyl)butansäureglykolester + Distearylthiodipropionat | 0,2 + 0,6 | 31 |
| 11 | Bis-[3,3-bis(4'-hydroxy-3'-tert. butylphenyl)butansäureglykolester + Distearylthiodipropionat + partielles Kondensationsprodukt aus 2,2'-Dimethyl-4,4'-dihydroxy-5,5'-di-tert. butyl-diphenylsulfid mit PCl₃ (gem. Beispiel 2) | 0,2 + 0,6 + 0,5 | 87 |
| 12 | keiner | - | 1 |

| | | | |
|---|---|---|---|
| ¹⁾ DE-A-1153894, Versprödungszeit bei Kontakt mit Kupferpulver. | | | |

Es ist bekannt, daß bestimmte Metallionen, die ihre Oxidationsstufe um eine Einheit ändern können, in der Regel Metalle mit teilweise gefüllten d-Orbitalen, als katalytisch wirkende Degradantien in Polymeren, insbesondere in Polyolefinen, wirken können. Durch Einbettung einer Kupferfolie wird dieser Einfluß simuliert. Wie ein Vergleich der Ergebnisse in Tabelle 1 zeigt, entfaltet das neue partiell kondensierte Stabilisatorgemisch eine hervorragende Schutzwirkung gegenüber dem schädigenden Einfluß von Metallionen.

Die hervorragenden stabilisierenden Eigenschaften des neuen partiell kondensierten Stabilisatorgemisches gemäß Beispiel 4 zeigen sich überlegen im Vergleich zu dem vernetzten Reaktionsprodukt aus DE-A-1 153 894 gemäß Beispiel 3 oder Beispiel 5, welches darüber hinaus noch antioxidativ stabilisierende wirkende Phenole enthält. So führt das mit dem neuen partiell kondensierten Stabilisatorgemisch stabilisierte Polymer ohne weitere Additive zu einer längeren Lebensdauer.
Darüber hinaus zeigen synergistische Stabilisatormischungen aus dem neuen partiell kondensierten Stabilisatorgemisch und phenolischen Antioxidantien und gegebenenfalls Schwefelcostabilisatoren erheblich bessere Wirkung als die einzelnen Produkte für sich. So ist die Zeit bis zur Versprödung bei Verwendung üblicher Thiocostabilisatoren oder phenolischer Antioxidantien kürzer als bei Verwendung des partiellen Kondensationsprodukts aus 2,2'-Dimethyl-4,4'dihydroxy-5,5'-di-tert.butyl-diphenylsulfid mit PCl₃ und liegt nur im Bereich weniger Tage. Werden hingegen Mischungen dieser Komponenten eingesetzt, erhöht sich die Lebensdauer weit über das zu erwartende additive Maß hinaus. Die Beispielpaare 6/7, 8/9 und 10/11 verdeutlichen diesen synergistischen Effekt. Die zu erwartende Zeit bis zur Versprödung bei additivem Effekt sollte bei 13 Tagen (8+5) liegen, tatsächlich werden jedoch 31 Tage erreicht.

### Beispiele 13 bis 15: Stabilisierung von Polyolefinen unter Verarbeitungsbedingungen.

100 Teile Polypropylenpulver werden mit 0,1 Teilen Calciumstearat und den in Tabelle 2 angegebenen Mengen an Stabilisatoren in einem Extruder mit einer Kurzkompressionsschnecke mit einer Länge von 450 mm und einem UD-Verhältnis von 20 über 3 Heizzonen mit 200°C, 230°C, 230°C granuliert. Anschließend wird der Schmelzindex der Zusammensetzung gemessen. Um die Beständigkeit gegenüber der Schädigung bei Verarbeitungsbedingungen zu prüfen, wird der Prozeß des Granulierens 5 mal wiederholt und nach der dritten und fünften Granulierstufe der Schmelzindex gemessen. Eine Erhöhung des Schmelzindex zeigt eine Schädigung des Polymeren durch die Verarbeitung an. Vorteilhaft sind gleichbleibend niedrige Werte.

Die Ergebnisse sind in Tabelle 2 zusammengefaßt.

**Tabelle 2**

| Schmelzindex nach Mehrfachgranulation von Polypropylen | | | | | |
|---|---|---|---|---|---|
| Bsp. Nr. | Stabilisator | Konzentration | Granulierstufe | | |
| | | [phr] | 1. | 3. | 5. |
| 13 | keiner | | 10,6 | 13,4 | 16,4 |
| 14 | Bis[3,3-bis/4'-hydroxy-3'-tert. butylphenyl]butansäure-glykolester + Distearyldisulfid | 0,2 + 0,3 | 3,6 | 4,1 | 4,8 |
| 15 | partielles Kondensationsprodukt aus 2,2'-Dimethyl-4,4'-dihydroxy- 5,5'-di-tert.butyl-diphenylsulfid mit PCl₃ gemäß Beispiel 2 | 0,5 | 3,1 | 3,2 | 4,2 |

Die Ergebnisse aus Tabelle 2 zeigen, daß das neue partielle Kondensationsprodukt gemäß Beispiel 2 im Beispiel 15 hervorragende Prozeßstabilisierungseigenschaften aufweist und die ursprünglichen Eigenschaften des Polymers auch nach fünf Verarbeitungsstufen faktisch unverändert sind. Beispiel 14 stellt den Vergleich an einer bekannten Stabilisatorkombination dar.

### Beispiele 16 bis 20: Stabilisierende Wirkung des neuen partiell kondensierten Stabilisatorgemisches in Polypropylen ohne Kupferkontakt.

100 Teile Polypropylenpulver werden mit 0,1 Teilen Calciumstearat und den in Tabelle 1 angegebenen Mengen an Stabilisatoren in einem Extruder mit einer Kurzkompressionsschnecke mit einer Länge von 450 mm und einem L/D-Verhältnis von 20 über 3 Heizzonen mit 200°C, 230°C, 230°C granuliert und anschließend aus dem Granulat mit einer Spritzgießmaschine über 4 Heizzonen mit 210°C, 220°C, 230°C, 240°C, einem Schneckendurchmesser von 36 mm und einem L/D-Verhältnis von 25 1 mm dicke Platten gespritzt.

Die so erhaltenen Prüfkörper werden in einen temperaturgeregelten Umluftofen bei der angegebenen Temperatur gelagert, bis visuell erkennbarer Abbau durch Verfärbung oder Rißbildung erkennbar wird oder die Proben beim Biegen um 180° brechen. Hohe Werte bis zur Versprödung in der beschleunigten Alterung im Umluftofen zeigen eine gute Stabilisierung an.

**Tabelle 3:**

| Langzeitwärmebeständigkeit von Polypropylen in Tagen: | | | |
|---|---|---|---|
| Beispiel Nr. | Stabilisator | Konzentration [phr] | Versprödungszeit bei 140°C [d] |
| 16 | partielles Kondensationsprodukt aus 2,2'-Dimethyl-4,4'-dihydroxy-5,5'-di-tert.-butyl-diphenylsulfid mit PCl₃ (gem. Beispiel 2) | 0,5 | 33 |
| 17 | Bis-[3,3-bis(4'-hydroxy-3'-tert.-butylphenyl)butansäureglykolester + Distearyldisulfid | 0,2 + 0,3 | 204 |
| 18 | Bis-[3,3-bis-(4'-hydroxy-3'-tert.-butylphenyl)butansäureglykolester + Distearylthiodipropionat + partielles Kondensationsprodukt aus 2,2'-Dimethyl-4,4'-dihydroxy-5,5'-di-tert.butyl-diphenylsulfid mit PCl₃ (gem. Beispiel 2) | 0,2 0,3 0,5 | 208 |
| 19 | keiner | 0,0 | 8 |
| 20 | partielles Kondensationsprodukt aus 2,2'-Dimethyl-4,4'-dihydroxy-5,5'-di-tert.-butyl-diphenylsulfid mit PCl₃ (gemäß Beispiel 2) + Distearyldisulfid | 0,5 0,15 | 186 |

Die stabilisierenden Eigenschaften des neuen partiell kondensierten Stabilisatorgemisches gemäß Beispiel 16 zeigen sich im Vergleich zu dem unstabilisierten Polymer im Bsp. 19.

Darüber hinaus zeigen synergistische Stabilisatormischungen aus dem neuen partiell kondensierten Stabilisatorgemisch und phenolischen Antioxidantien und/oder Schwefelcostabilisatoren erheblich bessere Wirkung als die einzelnen Produkte für sich.
In Beispiel 20 ist dies exemplarisch für einen Schwefelcostabilisator gezeigt.

## Patentansprüche

1. Stabilisator-Gemisch, erhältlich durch partielle Kondensation von PCl₃ mit 2,2'-Dimethyl-4,4*'*-dihydroxy-5,5*'*-di-tert.butyl-diphenylsulfid, im Molverhältnis zwischen 1:2.1 und 1:4.3, wobei der Phosphor-Gehalt zwischen 2 und 4 Gew.-% und der Rest-Gehalt an 2,2'-Dimethyl-4,4'-dihydroxy-5,5'-di-tert.butyldiphenylsulfid zwischen 0,5 und 50 Gew.-% liegt.

2. Stabilisator-Gemisch gemäß Anspruch 1, **dadurch gekennzeichnet, daß** der Phosphor-Gehalt zwischen 2,3 und 3,5 Gew.-% und der Gehalt an 2,2'-Dimethyl-4,4'-dihydroxy-5,5'-di-tert.butyl-diphenylsulfid zwischen 8 und 35 Gew.-% liegt.

3. Verfahren zur Herstellung des Stabilisator-Gemisches gemäß den Ansprüchen 1 oder 2 durch partielle Kondensation von PCl₃ und 2,2'-Dimethyl-4,4'dihydroxy-5,5'-di-tert.butyl-diphenylsulfid im Molverhältnis zwischen 1:2.1 und 1:4.3.

4. Verfahren gemäß Anspruch 3, **dadurch gekennzeichnet, daß** die Umsetzung in einem organischen Lösungsmittel, vorzugsweise einem aromatischen, erfolgt.

5. Verfahren gemäß Anspruch 4, **dadurch gekennzeichnet, daß** die Umsetzung in Toluol oder Xylol erfolgt.

6. Verfahren gemäß Anspruch 3, **dadurch gekennzeichnet, daß** die Umsetzung bei einer Temperatur von 20 bis 150°C, vorzugsweise von 100 bis 140°C, insbesondere von 115 bis 130°C, erfolgt.

7. Verfahren gemäß den Ansprüchen 3 bis 6, **dadurch gekennzeichnet, daß** 2,2'-Dimethyl-4,4*'*-dihydroxy-5,5*'*-di-tert.butyl-diphenylsulfid in einem Lösungsmittel gemäß der Ansprüche 4 oder 5 vorgelegt wird und PCl₃ im einem Zeitraum von 0,5 bis 8 Stunden, vorzugsweise von 3 bis 5 Stunden, langsam zugegeben wird.

8. Verfahren gemäß Anspruch 3, **dadurch gekennzeichnet, daß** das Produkt bei Temperaturen bis 190°C und vermindertem Druck bis 30 mbar über 2 bis 10 Stunden von flüchtigen Bestandteilen befreit wird.

9. Verwendung des Stabilisator-Gemisches gemäß den Ansprüchen 1 oder 2 zum Stabilisieren von organischem Material, insbesondere von Kunststoffen, gegen den schädigenden Einfluß von Sauerstoff, Licht und Wärme.

10. Verwendung gemäß Anspruch 9, **dadurch gekennzeichnet, daß** das organische Material in Kontakt mit Metallen oder Metallionen steht.

11. Organisches Material enthaltend ein Stabilisatorgemisch gemäß Anspruch 1, in einer Konzentration von 0,01 bis 5 Gew.-%, vorzugsweise von 0,05 bis 2 Gew.-%.

12. Organisches Material gemäß Anspruch 11, **dadurch gekennzeichnet, daß** es sich um Polyolefin, vorzugsweise Polyethylen, Polypropylen oder ein Copolymer von Polyethylen oder Polypropylen, insbesondere ein vemetztes Polyolefin handelt.

13. Organisches Material gemäß Anspruch 11 oder 12, worin zusätzlich Thiocostabilisatoren, Phosphite und phenolische Antioxidantien enthalten sind.

14. Organisches Material gemäß Anspruch 12 oder 13, **dadurch gekennzeichnet, daß** es sich um einen Masterbatch handelt.

## Claims

1. A stabilizer mixture obtainable by partial condensation of PCl₃ with 2,2'-dimethyl-4,4'-dihydroxy-5,5'-di-tert-butyldiphenyl sulfide in a molar ratio of from 1:2.1 to 1:4.3, where the phosphorus content is from 2 to 4% by weight and the residual content of 2,2'-dimethyl-4,4'.-dihydroxy-5,5'-di-tert-butyldiphenyl sulfide is from 0.5 to 50% by weight.

2. A stabilizer mixture as claimed in claim 1, wherein the phosphorus content is from 2.3 to 3.5% by weight and the content of 2,2'-dimethyl-4,4'-dihydroxy-5,5'-di-tert-butyldiphenyl sulfide is from 8 to 35% by weight.

3. A process for preparing the stabilizer mixture as claimed in claim 1 or 2 by partial condensation of PCl₃ and 2,2'-dimethyl-4,4'-dihydroxy-5,5'-di-tert-butyldiphenyl sulfide in a molar ratio of from 1:2.1 to 1:4.3.

4. The process as claimed in claim 3, wherein the reaction takes place in an organic solvent, preferably in an aromatic organic solvent.

5. The process as claimed in claim 4, wherein the reaction takes place in toluene or xylene.

6. The process as claimed in claim 3, wherein the reaction takes place at a temperature of from 20 to 150°C, preferably from 100 to 140°C, in particular from 115 to 130°C.

7. The process as claimed in any of claims 3 to 6, wherein the initial charge is 2,2'-dimethyl-4,4'-dihydroxy-5,5'-di-tert-butyldiphenyl sulfide in a solvent as claimed in claim 4 or 5 and PCl₃ is added slowly over a period of from 0.5 to 8 hours, preferably from 3 to 5 hours.

8. The process as claimed in claim 3, wherein the product is freed from volatile constituents for from 2 to 10 hours at temperatures of up to 190°C and at a pressure which may be reduced as far as 30 mbar.

9. The use of the stabilizer mixture as claimed in claim 1 or 2 for stabilizing organic material, in particular a plastic, against the damaging action of oxygen, light and heat.

10. The use as claimed in claim 9, wherein the organic material is in contact with metals or metal ions.

11. An organic material comprising a stabilizer mixture as claimed in claim 1 at a concentration of from 0.01 to 5% by weight, preferably from 0.05 to 2% by weight.

12. An organic material as claimed in claim 11, which is a polyolefin, preferably polyethylene, polypropylene or a copolymer of polyethylene or polypropylene, in particular a crosslinked polyolefin.

13. An organic material as claimed in claim 11 or 12, wherein thio-costabilizers, phosphates or phenolic antioxidants are also present.

14. An organic material as claimed in claim 12 or 13, which is a masterbatch.

## Revendications

1. Mélange d'agents de stabilisation obtenu par condensation partielle de PCl₃ et de sulfure de 2,2'-diméthyl-4,4'-dihydroxy-5,5'-di-tert.butyl-diphényle dans un rapport molaire compris entre 1:2,1 et 1:4,3, la teneur en phosphore étant comprise entre 2 et 4% en poids et la teneur résiduelle en sulfure de 2,2'-diméthyl-4,4'-dihydroxy-5,5'-di-tert.butyl-diphényle entre 0,5 et 50% en poids.

2. Mélange d'agents de stabilisation selon la revendication 1, **caractérisé en ce que** la teneur en phosphore est comprise entre 2,3 et 3,5% en poids et la teneur en sulfure de 2,2'-diméthyl-4,4'-dihydroxy-5,5'-di-tert.butyl-diphényle entre 8 et 35% en poids.

3. Procédé pour la préparation du mélange d'agents de stabilisation selon la revendication 1 ou 2, par condensation partielle de PCl₃ et de sulfure de 2,2'-diméthyl-4,4'-dihydroxy-5,5'-di-tert.butyl-diphényle dans un rapport molaire compris entre 1:2,1 et 1:4,3.

4. Procédé selon la revendication 3, **caractérisé en ce que** la conversion s'effectue dans un solvant organique, de préférence aromatique.

5. Procédé selon la revendication 4, **caractérisé en ce que** la conversion s'effectue dans le toluène ou le xylène.

6. Procédé selon la revendication 3, **caractérisé en ce que** la conversion s'effectue à une température de 20 à 150°C, de préférence de 100 à 140°C et en particulier de 115 à 130°C.

7. Procédé selon la revendication 3 à 6, **caractérisé en ce que** le sulfure de 2,2'-diméthyl-4,4'-dihydroxy-5,5'-di-tert.butyl-diphényle est d'abord placé dans un solvant selon les revendications 4 ou 5, le PCl₃ étant ajouté lentement en une durée de 0,5 à 8 heures et de préférence de 3 à 5 heures.

8. Procédé selon la revendication 3, **caractérisé en ce que** le produit est débarrassé des composants volatils à des températures qui peuvent atteindre 190°C et sous une pression réduite jusque 30 mbars, pendant 2 à 10 heures.

9. Utilisation du mélange d'agents de stabilisation selon la revendication 1 ou 2 pour la stabilisation d'un matériau organique, en particulier de matières synthétiques, contre l'influence nocive de l'oxygène, de la lumière et de la chaleur.

10. Utilisation selon la revendication 9, **caractérisée en ce que** le matériau organique est en contact avec des métaux ou des ions métalliques.

11. Matériau organique contenant un mélange d'agents de stabilisation selon la revendication 1 à une concentration de 0,01 à 5% en poids et de préférence de 0,05 à 2% en poids.

12. Matériau organique selon la revendication 11, **caractérisé en ce qu'**il est une polyoléfine, de préférence le polyéthylène, le polypropylène ou un copolymère de polyéthylène ou de polypropylène, en particulier une polyoléfine réticulée.

13. Matériau organique selon la revendication 11 ou 12, qui contient en supplément des co-agents de stabilisation thio, des phosphites et des antioxydants phénoliques.

14. Matériau organique selon la revendication 12 ou 13, **caractérisé en ce qu'**il s'agit d'une charge principale
